# EUROPÄISCHE PATENTSCHRIFT

(11) **EP 1 517 061 B1**
(45) Veröffentlichungstag und Bekanntmachung des Hinweises auf die Patenterteilung: **27.08.2008**
(21) Anmeldenummer: 04021271.4
(22) Anmeldetag: 08.09.2004
(51) Int. Cl.: F16D 33/20, F16D 57/04

(54) **Hydrodynamischer Retarder oder hydrodynamische Kupplung**
Hydrodynamic retarder or hydrodynamic coupling.
Ralentisseur hydrodynamique ou accouplement hydrodynamique.

(30) Priorität: 19.09.2003 DE 10343425
(43) Veröffentlichungstag der Anmeldung: 23.03.2005
(73) Patentinhaber: ZF FRIEDRICHSHAFEN AG, 88046 Friedrichshafen (DE)
(72) Erfinder: Selinka, Christian, 97074 Würzburg (DE); Johann, Herbert, 97078 Würzburg (DE)

(56) Entgegenhaltungen:
- DE-A- 4 319 469
- DE-A- 10 028 229
- US-A- 2 779 292
- US-A- 2 785 636

## Beschreibung

Die Erfindung betrifft einen hydrodynamischen Retarder oder eine hydrodynamische Kupplung gemäß dem Oberbegriff des Anspruches 1.

Durch die DE ,100 64 014 A1 ist eine solche hydrodynamische Kupplung in Form eines Drehmomentwandlers bekannt, die ein mit einem Antrieb verbindbares erstes Schaufelrad und ein mit einer Getriebeeingangswelle verbindbares zweites Schaufelrad aufweist, die zur Bildung eines hydrodynamischen Kreises beitragen. Jedes dieser Schaufelräder besteht aus jeweils einem Grundkörper und einer an dieser festen Beschaufelung mit einer Mehrzahl von Schaufeln, die jeweils über Schaufellappen mit Aufnahmen des Grundkörpers in Eingriff bringbar sind. Dabei sind an beiden Schaufelrädern Schaufellappen im Wesentlichen im radial äußeren sowie im radial inneren Bereich vorgesehen, die gegenüber der Schaufel mit einer überwiegenden Komponente in Radialrichtung ausgerichtet sind und in entsprechend positionierte und ausgebildete Aufnahmen im Grundkörper eingreifen. Derartig ausgerichtete Schaufellappen werden üblicherweise als Radialschaufellappen bezeichnet, die zugeordneten Aufnahmen als Radialaufnahme.

Im Wesentlichen im radial mittleren Bereich der Schaufeln sind Schaufellappen vorgesehen, die mit einer überwiegenden Komponente in Axialrichtung ausgerichtet sind, und in entsprechend positionierte und ausgerichtete Aufnahmen des jeweiligen Grundkörpers eingreifen. Derartige Schaufellappen werden als Axialschaufellappen bezeichnet, die zugeordnete Aufnahme als Axialaufnahme.

Bei dem beschriebenen Drehmomentwandler sind sowohl die Grundkörper des jeweiligen Schaufelrades als auch die Schaufeln jeweils aus Blech hergestellt, sodass insgesamt eine vergleichsweise kostengünstige und gewichtsarme Konstruktion entsteht. Zum Verbinden der Schaufeln mit dem Grundkörper bei der Fertigung der Schaufelräder wird vorzugsweise die Schaufel gegenüber dem Grundkörper derart positioniert, dass einer von deren Radialschaufellappen, vorzugsweise der radial äußere Radialschaufellappen, in die zugeordnete Radialaufnahme eingesteckt wird. Durch eine anschließende Schwenkbewegung der Schaufel um den radial äußeren Schaufellappen als Schwenkpunkt dringt zunächst der Axialschaufellappen in die Axialaufnahme und dann der radial innere Radialschaufellappen in die zugeordnete Radialaufnahme ein, wobei nach Einrasten des letztgenannten Radialschaufellappens in seiner Radialaufnahme die Schaufel vorläufig im Grundkörper positioniert ist und anschließend beispielsweise durch eine Hartverlötung endgültig befestigt werden kann.

Ein derartiger konstruktiver Aufbau mag für einen hydrodynamischen Drehmomentwandler mit in Radialrichtung groß bemessenen Schaufelrädern vorzüglich geeignet sein, jedoch hat sich erwiesen, dass bei radial kleinen Schaufelrädern mit sehr kleinem Abstand zwischen einem radial äußeren und einem radial inneren Radialschaufellappen eine Schaufel mit der zuvor beschriebenen Vorgehensweise nicht mit der benötigten Problemlosigkeit in den entsprechenden Grundkörper einsetzbar ist. Aus diesem Grund werden beispielsweise hydrodynamische Retarder, bei denen der hydrodynamische Kreis zwischen Außen- und Innendurchmesser an Rotor- und Statorschaufelrad sehr viel kleiner ist als bei den Schaufelrädern eines hydrodynamischen Drehmomentwandlers, entweder einteilig in Gusstechnologie hergestellt, wie dies beispielsweise in der DE-OS 26 06 430 behandelt ist, oder aber es wird eine Gemischtbauweise gemäß der DE 195 44 188 C2 angewandt, bei welcher aus Blech bestehende Schaufeln in einen gegossenen Grundkörper eingebracht sind. Wie in dieser Patentschrift eingeräumt wird, ist ein Gussverfahren allerdings aufwendig und teuer.

Eine spezielle Gestaltung eines Schaufelrades für einen hydrodynamischen Drehmomentwandler ist der DE 43 19 469 A1 entnehmbar. Auch dieses Schaufelrad besteht aus einem Grundkörper und einer an dieser festen Beschaufelung mit einer Mehrzahl von Schaufeln, die jeweils über Schaufellappen mit Aufnahmen des Grundkörpers in Eingriff bringbar sind. Die Aufnahmen sowie die Schaufellappen sind hierbei im Wesentlichen im radial äußeren sowie im radial inneren Bereich der Beschaufelung vorgesehen, und verfügen jeweils über Komponenten in Radial- und in Axialrichtung. Die Aufnahmen sind jeweils zur offenen Seite des Schaufelrades hin offen, so dass die Schaufeln auch bei kleinen Schaufelrädern durch eine reine Axialbewegung gut eingesetzt werden können.

Die Aufnahmen sowie die Schaufellappen sind zwar jeweils in Radialrichtung auf eine Drehachse des Schaufelrades hin ausgerichtet, jedoch unter einem Winkel θ zueinander versetzt, der durch eine profilierte Gestaltung der Schaufeln der Beschaufelung bedingt ist. Ebenfalls bedingt durch die profilierte Gestaltung der Schaufeln ist gegebenfalls eine Ausrichtung von Schaufellappen entlang ihrer Erstreckungslänge unter einem vorbestimmten Winkel gegenüber der Schaufelfläche. Die Schaufellappen sind hierbei in Position und Form an die Aufnahmen im Grundkörper angepasst.

Eine ebenfalls axiale Einschubbewegbarkeit für die Montage einer Beschaufelung in einen Grundkörper eines Schaufelrades ist der DE 100 28 229 A1 entnehmbar, und zwar beispielhaft ausgeführt anhand eines Pumpenrades. Einmal eingesetzt, ist Aufnahmen und Schaufellappen allerdings jeweils ein Befestigungsmittel zugeordnet, und zwar radial außen ein Sicherungsring und radial innen ein an der Schaufel vorgesehener und fest mit dem Grundkörper verbundener Befestigungsvorsprung.

Der Erfindung liegt die Aufgabe zugrunde, einen hydrodynamischen Retarder oder eine hydrodynamische Kupplung derart auszubilden, dass auch bei sehr kleiner radialer Ausdehnung von Schaufelrädern eine problemlose Montierbarkeit gewährleistet ist.

Diese Aufgabe wird erfindungsgemäß durch die im Kennzeichen des Anspruches 1 angegebenen Merkmale gelöst.

Durch das zumindest teilweise Eindringen wenigstens eines Teils der Radialaufnahmen in den axialen Randbereich des Grundkörpers eines Schaufelrades an dessen dem Grundkörper des jeweils anderen Schaufelrades zugewandter offener Seite wird die Möglichkeit geschaffen, zumindest einen Teil der Radiallappen der einzubringenden Schaufeln von der offenen Seite des Grundkörpers aus einzuschieben. Wird beispielsweise der radial äußere Radialschaufellappen in die zugeordnete Radialaufnahme eingesteckt und durch eine Schwenkbewegung der Schaufel mit dem radial äußeren Radiallappen als Schwenkpunkt in den Grundkörper hineinbewegt, so dringt zunächst ein radial weiter innenliegender Axialschaufellappen in die zugeordnete Axialaufnahme im Grundkörper ein, während ein nochmals weiter radial innen liegender Radialschaufellappen aufgrund einer Ausbildung der radial inneren Radialaufnahme in den axialen Randbereich des Grundkörpers von dessen offener Seite aus einfach eingeschoben werden kann.

Ebenso ist vorstellbar, sowohl die radial äußere als auch die radial innere Radialaufnahme in den axialen Randbereich des Grundkörpers an dessen dem jeweils anderen Schaufelrad zugewandter offener Seite eindringen zu lassen, sodass Schaufeln zum Einlegen in den Grundkörper von dessen offener Seite aus einfach eingeschoben werden können, bis die jeweilige Schaufel mit einem grundkörperseitigen Schaufelrand am Grundkörper in Anlage gekommen und der Axialschaufellappen in die zugeordnete Axialaufnahme eingedrungen ist.

Lediglich der Vollständigkeit halber sei darauf hingewiesen, dass die Radialschaufellappen nicht ausschließlich über eine Komponente in radialer Richtung verfügen müssen, sondern es genügt bereits, dass sie mit einer überwiegenden Komponente in Radialrichtung verlaufen. Ebenso verhält es sich bei den Axialschaufellappen, die somit mit einer überwiegenden Komponente in Axialrichtung ausgerichtet sein sollten. Entsprechend an die Erstreckungsrichtung der Schaufellappen sind die jeweiligen Aufnahmen im Grundkörper ausgebildet, sodass die Radialaufnahmen über eine Erstreckung mit einer überwiegenden Komponente in Radialrichtung und die Axialaufnahmen über eine Erstreckung mit überwiegend axialer Komponente im Grundkörper verfügen.

Eine besonders konsequente Anwendung dieses erfindungsgemäßen Prinzips liegt vor, wenn die erfindungsgemäß ausgebildeten Radialaufnahmen den axialen Randbereich des Grundkörpers axial vollständig durchdringen und somit an der offenen Seite desselben münden. Eine derartige konstruktive Ausbildung ermöglicht eine besonders einfache Montage der Schaufeln im Grundkörper.

Um den Radialschaufellappen einen festen Halt im Grundkörper zu bieten, ist mit Vorzug jeweils der Boden der Radialaufnahmen durch einen Winkel γ gegenüber einem vom grundkörperseitigen Schaufelrand der Schaufel abgewandten freien Ende des Radialschaufellappens ausgerichtet. Spätestens beim fertigungsbedingten Füllen der Radialaufnahmen mit Hartlot findet somit trotz der winkelgemäßen Ausrichtung der Radialschaufellappen eine innige Verbindung derselben mit den Radialaufnahmen des Grundkörpers statt.

Um dem Axiaischaufellappen trotz seines Eindringens in die zugeordnete Axialaufnahme eine gute Abstützung im Grundkörper zu ermöglichen, sind die Axialschaufellappen jeweils an ihren vom grundkörperseitigen Schaufelrand abgewandten freien Enden mit Anprägungen ausgebildet, die an zumindest einer der vorerwähnten Seitenwände der Axialaufnahme in Anlage kommen. Vorzugsweise ist hierbei die Anprägung so ausgebildet, dass sie den Winkel zwischen dem Axialschaufellappen und der Axialaufnahme kompensiert.

Die Schaufeln greifen mit ihren Axialschaufellappen winklig in die zugeordnete Axialaufnahme ein, die, um bei der umformtechnischen Herstellung des Grundkörpers keine Umfangskräfte in denselben einzubringen, vorzugsweise geradlinig mit Ausrichtung auf dessen Achse ausgebildet sind. Die Axialaufnahmen sind, um den Axialschaufellappen das problemlose Eindringen zu ermöglichen, mit Seitenwänden ausgebildet, die durch den Boden der Axialaufnahme auf einem Abstand A zueinander positioniert sind, der deutlich über einen Querschnitt L des Axialschaufellappens hinausgeht.

Die Schaufeln selbst sind mit einer Schirmung in Richtung zur Druckseite ausgebildet und verfügen somit über eine höhere Verformungsstabilität. Des Weiteren verfügen die Schaufeln an ihren fluideintrittsseitigen Kanten über je eine Anprägung, welche im Zusammenwirken mit der zuvor erläuterten Schrägstellung der Schaufeln im Grundkörper für eine Vergrößerung der Scherfläche in Verbindung mit dem jeweils anderen Schaufelrad und damit mit einer erhöhten Momentenübertragbarkeit sorgt. Da durch diese Anprägung an der fluidantriebsseitigen Kante der Schaufeln eine Querschnittsschwächung der Schaufeln einhergeht, dieselben aber mit hoher Stabilität mit dem Grundkörper verbunden sein sollen, ist weiterhin vorgesehen, die Anprägung radial zwischen zwei Stützbereichen der Schaufeln vorzusehen, wobei diese Stützbereiche an Verbindungen zwischen den Schaufeln und dem Grundkörper vorgesehen sind. Die Stützbereiche werden durch anprägungsfreie Zonen der fluidantriebsseitigen Kante der Schaufeln gebildet und dienen somit als Teil der Schaufeln, der an der fluideintrittsseitigen Kante den vollen Schaufelquerschnitt gewährleistet.

Die Erfindung ist anhand eines Ausführungsbeispieles näher erläutert. Es zeigt:
- Fig..1: Die obere Hälfte eines Längsschnittes durch einen hydrodynamischen Retarder mit einem Rotor- und einem Statorschaufelrad; `
- Fig. 2: eine Draufsicht auf das herausgezeichnete Statorschaufelrad gemäß der Blickrichtung II-II in Fig. 1;
- Fig. 3: einen Schnitt durch das Statorschaufelrad gemäß der Schnittlinie III-III in Fig. 2;
- Fig. 4: einen Schnitt durch das Statorschaufelrad gemäß der Schnittlinie IV-IV in Fig. 2;
- Fig. 5: wie Fig. 4, aber gemäß der Schnittlinie V-V und somit ohne Schaufeln;
- Fig. 6: eine der in Fig. 4 erkennbaren Schaufeln als Einzelheit;
- Fig. 7: die Schaufel nach Fig. 6, von der Gegenseite aus gesehen;
- Fig. 8: die Schaufel mit Blickrichtung VIII-VIII in Fig. 7;
- Fig. 9: die Schaufel gemäß einer Schnittlinie IX-IX in Fig. 7;
- Fig. 10: eine detaillierte Herauszeichnung des Eindringens eines Axialschaufellappens der Schaufel in eine Radialaufnahme des Grundkörpers in Schnittdarstellung;
- Fig. 11: eine detaillierte Herauszeichnung des Eindringens von Axialschaufellappen der Schaufeln in eine jeweils zugeordnete Axialaufnahme des Grundkörpers in Schnittdarstellung.

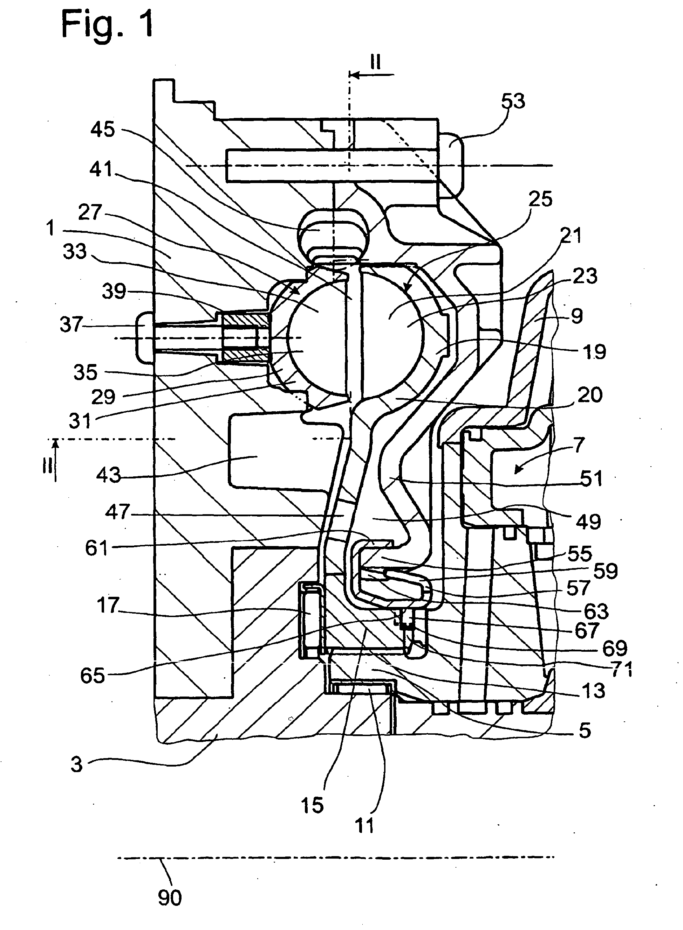

Fig. 1 zeigt einen hydrodynamischen Retarder. Hierzu ist ein mit einem nicht gezeigten Getriebegehäuse drehfester Retarderträger 1 vorgesehen, der ein ebenfalls drehfestes Stützelement 3 radial umschließt. Das Stützelement 3 ist, unter Zwischenschaltung einer Radiallagerung 11, ebenfalls umschlossen, und zwar von einer Kupplungsnabe 5 einer Kupplungseinheit 7, die über ein Kupplungsgehäuse 9 verfügt und in nicht gezeigter Weise mit einer ebenfalls nicht gezeigten Getriebeeingangswelle in drehfester Verbindung steht. Aufgrund dieser Verbindung nimmt die Kupplungseinheit 7 und damit das Kupplungsgehäuse 9 an einer Drehbewegung der Getriebeeingangswelle teil.

Zurückkommend auf die Kupplungsnabe 5 der Kupplungseinheit 7, steht diese über eine Verzahnung 13 mit einer Rotornabe 15 des Retarders in Eingriff, wobei sich die Rotornabe 15 an ihrer der Kupplungseinheit 7 abgewandten Seite über eine Axiallagerung 17 am Stützelement 3 axial abstützt. Die Rotornabe 15 ist an einem als Rotorschale 20 dienenden Grundkörper 19 befestigt, der sich, ausgehend von der Rotornabe 15, nach radial außen erstreckt und im radial äußeren Bereich eine Beschaufelung 21 mit einer Mehrzahl von Schaufeln 23 zur Bildung eines ersten Schaufelrades in Form eines Rotorschaufelrades 25 aufnimmt. Das Rotorschaufelrad 25 wirkt mit einem zweiten Schaufelrad in Form eines Statorschaufelrades 27 des Retarders zusammen, das ebenfalls über einen Grundkörper 29 verfügt, der als Statorschale 31 wirksam ist und zur Aufnahme einer Beschaufelung 33 mit Schaufeln 35 dient. An der Statorschale 31 sind an deren vom Rotorschaufelrad 25 abgewandten Seite über den Umfang verteilt Gewindehülsen 39 vorgesehen, in die jeweils ein Befestigungselement 37 einbringbar ist, wobei durch die Befestigungselemente 37 in Verbindung mit den Gewindehülsen 39 das Statorschaufelrad 27 am Retarderträger 1 befestigt ist.

Das Rotorschaufelrad 25 bildet zusammen mit dem Statorschaufelrad 27 einen hydrodynamischen Kreis 41, der mit viskosem Medium zumindest teilweise befüllt ist. Der Füllungsgrad des hydrodynamischen Kreises 41 kann mittels einer Fluidzufuhr 43 erhöht werden, während über einen Fluidauslass 45 viskoses Medium aus dem hydrodynamischen Kreis 41 entzogen werden kann. In bekannter Weise kann über den Befüllungsgrad des hydrodynamischen Kreises 41 dessen Momentenübertragbarkeit und damit die durch den Retarder ausgelöste Bremswirkung eingestellt werden. Die Fluidzufuhr 43 dient somit im Zusammenhang mit dem Fluidauslass 45 zur Regelung des Retarders.

Zurückkommend auf den Grundkörper 19 des Rotorschaufelrades 25, ist in diesem ein Druckausgleich 47 in Form zumindest einer Durchgangsbohrung ausgebildet.

Durch diesen Druckausgleich 47 wird der hydrodynamische Kreis 41 mit einem Ausgleichsraum 49 verbunden, der sich axial zwischen dem Grundkörper 19 des Rotorschaufelrades 25 und einem Dichtflansch 51 befindet, der über Befestigungselemente 53 am Retarderträger 1 befestigt ist. Bevor eingehend auf die konstruktive Ausführung dieses Dichtflansches 51 hingewiesen wird, sei kurz die Funktion des Ausgleichsraumes 49 erläutert, der aufgrund des Druckausgleiches 47 über ähnliche Druckbedingungen wie der hydrodynamische Kreis 41 verfügt und somit eine starke einseitige Belastung des Grundkörpers 19 des Rotorschaufelrades 25 von der Seite des hydrodynamischen Kreises 41 aus verhindert.

Der Dichtflansch 51 weist im radial inneren Bereich einen im Wesentlichen auf das Rotorschaufelrad 25 zugerichteten, sich axial erstreckenden Aufnahmevorsprung 55 auf, an welchem eine Ringfederdichtung 57 vorgesehen ist. Diese hintergreift mit einem ersten Schenkel 59 eine am Aufnahmevorsprung 55 vorgesehene Radialnase 63 und umgreift mit einem zweiten Schenkel 61 die radiale Gegenseite des Aufnahmevorsprunges 55. Derart sowohl axial als auch radial am Dichtflansch 51 aufgenommen, belastet die Ringfederdichtung 57 mit einer Bodenfläche 65 die Kupplungsnabe 5. Um an dieser Kontaktstelle zwischen dem ortsfesten Dichtflansch 51 und der rotierenden Kupplungseinheit 7 eine hinreichende Dichtung zu gewährleisten, ist in einer Nutung 69 der Kupplungsnabe 5 ein Dichtring 67 eingesetzt, der vorzugsweise ebenso wie die Nutung 69 von rechteckigem Querschnitt ist. Der Dichtring 67 besteht bevorzugt aus Grauguss, ist aber alternativ auch aus einem elastomeren Werkstoff herstellbar. Dem Dichtring ist eine in der Kupplungsnabe 5 ausgebildete, im Wesentlichen radial verlaufende Schmierbohrung 71 zugeordnet.

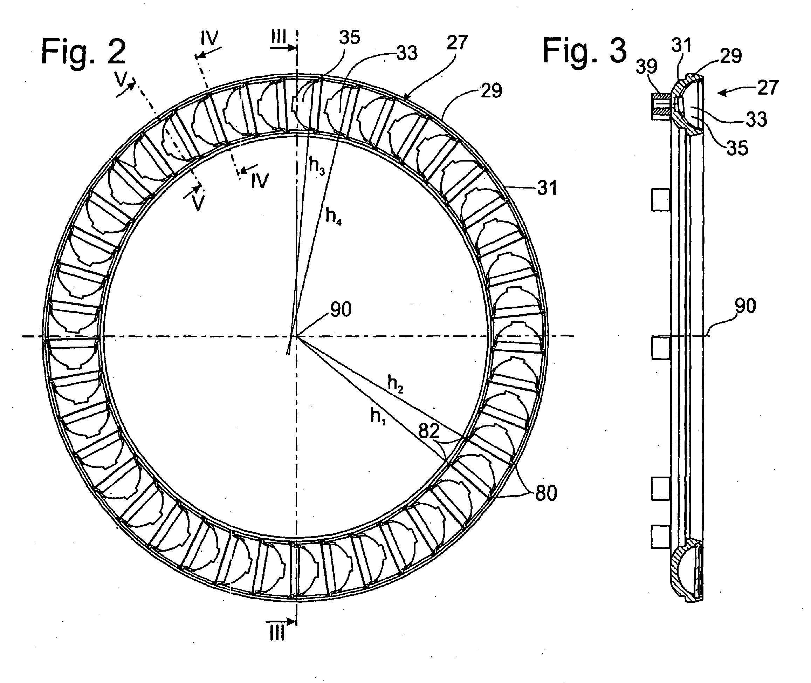

Wie aus Fig. 1 entnehmbar, ist der Retarder gegenüber einer Achse 90 zentriert. Diese Achse ist ebenso in den Fig. 2 und 3 erkennbar, wobei insbesondere die Fig. 2 zur Darstellung der Beschaufelung 33 im Grundkörper 29 des Statorschaufelrades 27 dient. Da das Rotorschaufelrad 25 bezüglich der Befestigung und Anordnung seiner Beschaufelung 21 im Grundkörper 19 identisch ausgebildet ist wie das Statorschaufelrad 27, soll sich die nachfolgende Beschreibung auf das Statorschaufelrad 27 beschränken.

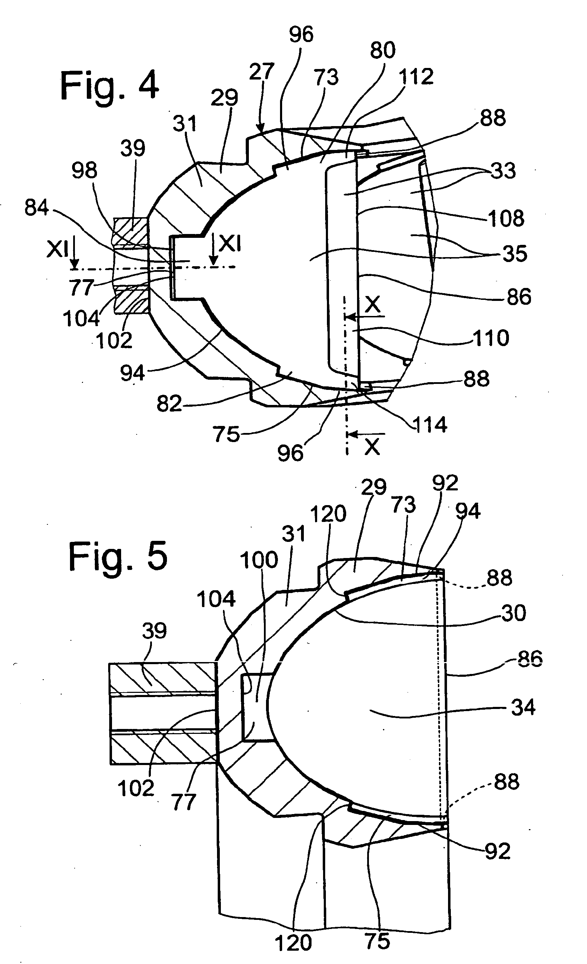

Fig. 4 zeigt ein mit zwei in Umfangsrichtung nebeneinander liegenden Schaufeln 35 ausgebildetes Ringsegment des in Fig. 2 in seiner Gesamtheit gezeigten Statorschaufelrads 27. Beginnend mit der konstruktiven Ausführung des Grundkörpers 29, weist dieser, wie in Fig. 5 deutlicher erkennbar ist, eine Mehrzahl an Aufnahmen 73, 75, 77 auf, von denen eine radial äußere Aufnahme 73 und eine radial innere Aufnahme 75 sich gegenüber einer inneren Grundkörperwand 30 mit einer überwiegenden Komponente in Radialrichtung erstrecken, weshalb diese beiden Aufnahmen 73, 75 nachfolgend als Radialaufnahmen bezeichnet sind. Die Radialaufnahme 73 erstreckt sich hierbei, ausgehend von der inneren Grundköperwand 30, nach radial außen, die Radialaufnahme 75 dagegen nach radial innen.

Im Wesentlichen in radialer Mitte eines Schaufelraumes 34 im Grundkörper 29 ist die weitere Aufnahme 77 vorgesehen, die, ausgehend von der inneren Grundkörperwand 30, sich mit einer überwiegenden Komponente in Axialrichtung erstreckt, weshalb diese Aufnahme 77 nachfolgend als Axialaufnahme bezeichnet ist. Diese ist, vorzugsweise mittels plastischer Verformung, tief in den Grundkörper 29 eingearbeitet und radial außen ebenso wie radial innen durch denselben begrenzt. Des Weiteren ist die Axialaufnahme 77 an ihrer vom Schaufelraum 34 abgewandten Seite durch einen Boden 104 des Grundkörpers 29 begrenzt, der hier eine geschlossene Seite 102 aufweist, während seine dem jeweils anderen Schaufelrad zugewandte, axiale Gegenseite als offene Seite 86 ausgebildet ist.

Im Vergleich zur Axialaufnahme 77 verfügen die Radialaufnahmen 73, 75 über eine erheblich geringere Eindringtiefe in den Grundkörper 29, und sind durch diesen auch lediglich in Radialrichtung sowie in Richtung zu dessen geschlossener Seite 102 begrenzt. An der Seite des offenen Endes 86 des Grundkörpers 29 ist dagegen sowohl die Radialaufnahme 73 als auch die Radialaufnahme 75 jeweils offen, und durchdringt dadurch einen der offenen Seite 86 zugeordneten axialen Randbereich 88. Dieser ist in Strichlinierung in Fig. 5 eingezeichnet.

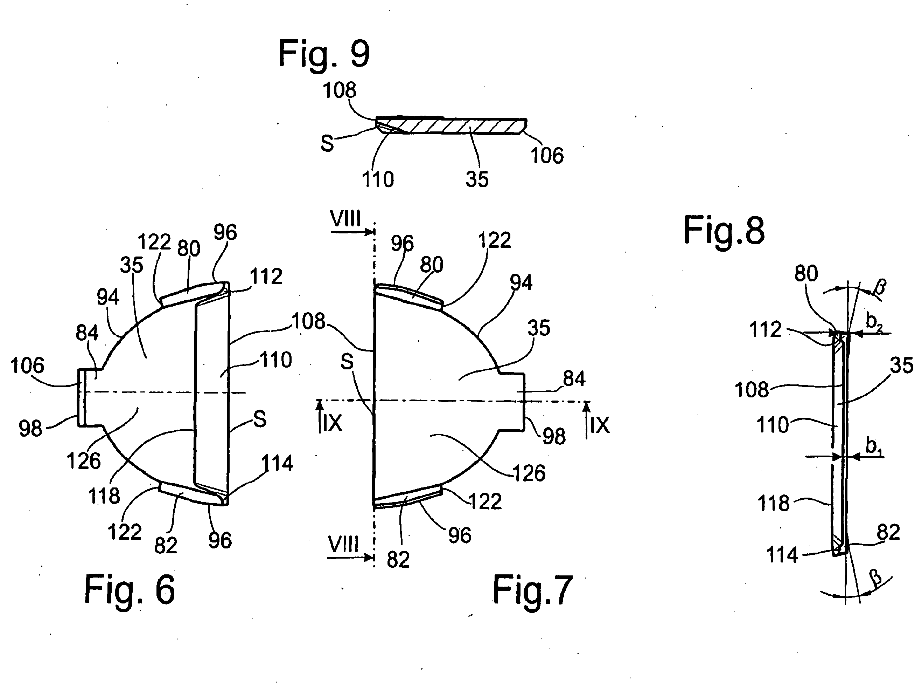

Fig. 6 zeigt eine Schaufel 35 als Einzelheit und in derjenigen Position, in welcher sie in den in Fig. 5 gezeigten Grundkörper 29 eingesetzt werden soll. Die Schaufel 35 verfügt über Schaufellappen 80, 82, die sich, ausgehend von einem grundkörperseitigen Schaufelrand 94, mit einer überwiegenden Komponente in Radialrichtung erstrecken und daher nachfolgend als Radialschaufellappen bezeichnet sind. Des Weiteren ist etwa in radialer Schaufelmitte ein weiterer Schaufellappen 84 vorgesehen, der sich, ausgehend vom grundkörperseitigen Schaufelrand 94 mit einer überwiegenden Axialkomponente erstreckt und daher als Axialschaufellappen 84 bezeichnet ist. Der Axialschaufellappen 84 ist an seinem vom grundkörperseitigen Schaufelrand 94 wegweisenden freien Ende 98 mit einer Anprägung 106 versehen, die auch in Fig. 9 erkennbar ist.

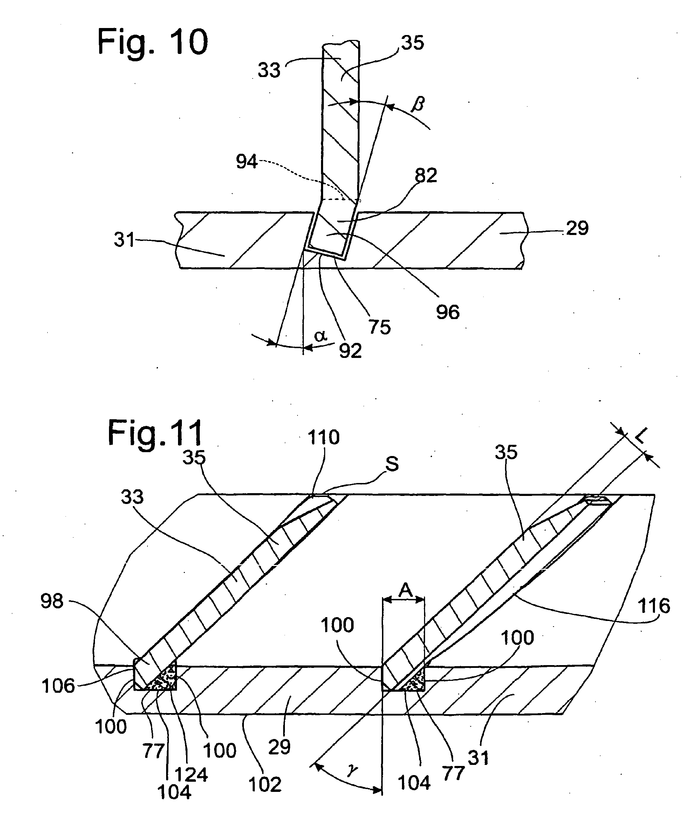

Die dem Axialschaufellappen 84 gegenüberliegende Axialseite der Schaufel 35 dient als fluideintrittsseitige Kante 108, an der eine Anprägung 110 (vgl. ebenfalls Fig. 9) ausgebildet ist. Radial außerhalb der Anprägung 110 befindet sich ein erster Stützbereich 112, während radial innerhalb der Anprägung 110 ein zweiter Stützbereich 114 vorgesehen ist. Diese Stützbereiche 112, 114 sind jeweils radial benachbart zu den Radialschaufellappen 80, 82 vorgesehen und erstrecken sich, wie Fig. 8 zeigt, im Wesentlichen über den Querschnitt der Schaufel 35. Die radial dazwischen liegende Anprägung 110 reduziert dagegen den Schaufelquerschnitt zunehmend, und zwar beginnend von einer schaufelinneren Kante 118 (Fig. 6) zur fluideintrittsseitigen Kante 108, an welcher die Schaufel 35 im Bereich der Anprägung 110 über den geringsten Querschnitt verfügt. In Fig. 8 ist mit b₁ der Querschnitt an der fluideintrittsseitigen Kante 108 und an der Stelle mit b₂ der Querschnitt im Stützbereich 112 angegeben. Ziel dieser Maßnahmen ist, dass bei der üblichen Schrägstellung der Schaufeln 35 im Grundkörper 29, wie dies in Fig. 11 erkennbar ist, die Scherfläche S aufgrund der Anprägung 110 vergrößerbar und damit die Momentenübertragungsfähigkeit gegenüber dem jeweils anderen Schaufelrad erhöht ist, während gleichzeitig aufgrund der Stützbereiche 112, 114 (Fig. 6, 8) die Schaufel 35 in Querrichtung aufgrund des höheren Querschnittes über die gewünschte Stabilität verfügt.

Fig. 7 zeigt die Schaufel 35 von ihrer Rückseite aus, die ohne die Anprägungen 106 und 110 ausgebildet ist.

Um die in Fig. 6 gezeigte Schaufel 35 in den Grundkörper 29 gemäß Fig. 5 einzubringen, wird sie von dessen offener Seite 86 aus mit dem Axialschaufellappen 84 voran in den Schaufelraum 34 des Grundkörpers 29 eingebracht, wobei die Radialschaufellappen 80, 82 bereits im axialen Randbereich 88 beginnen, in die jeweils zugeordnete Radialaufnahme 73, 75 einzugreifen, während der Axialschaufellappen 84 zu diesem Zeitpunkt noch nicht begonnen hat, in die Axialaufnahme 77 einzudringen. Bei Fortsetzung dieser Bewegung der Schaufel 35 relativ zum Grundkörper 29 tauchen die Radialschaufellappen 80, 82 immer tiefer in die zugeordneten Radialaufnahmen 73, 75 ein, und auch der Axialschaufellappen 84 beginnt, in die Axialaufnahme 77 einzudringen. Die Schaufel 35 ist in den Grundkörper 29 eingesetzt, wenn Anschlagenden 122 an den Radialschaufellappen 80, 82 die jeweils zugeordneten Anschlagkanten 120 im Grundkörper erreicht haben. Der Axialschaufellappen 84 ist dann in die Axialaufnahme 77 eingedrungen und kommt mit seinem freien Ende 98 sowohl am Boden 104 der Axialaufnahme 77 als auch, aufgrund seiner Anprägung 106, an einer der Seitenwände 100 (vgl. Fig. 11) zur Anlage. Sobald bei der anschließenden, zur Festverbindung der Schaufel 35 mit dem Grundkörper 29 üblicherweise verwendeten Hartverlötung Lot, das in Fig. 11 durch Punktierung dargestellt ist, in den verbleibenden Freiraum 124 der Axialaufnahme 77 eingedrungen und ausgehärtet ist, ist ein Verbund entstanden, der sich durch hohe Stabilität auszeichnet.

Wegen der schrägen Einführung der Schaufeln 35 gegenüber dem Grundkörper 29 ist der Boden 104 zwischen den beiden Seitenwänden 100, wie die rechte Seite der Fig. 11 anschaulich zeigt, mit einer Breite A bemessen, welche den Querschnitt L der Schaufel 35 deutlich übersteigt. Auf diese Weise ist eine problemlose Einführbarkeit der Schaufel 35 in die Axialaufnahme 77 gewährleistet. In Fig. 11 ist darüber hinaus die bereits erläuterte Ausbildung der Anprägung 110 zur Vergrößerung der Scherfläche S deutlich erkennbar, und zwar an der in Fig. 11 linken Schaufel.

Wie in Fig. 2 anhand der beiden eingezeichneten Hilfslinien h₁ und h₂ erkennbar ist, sind die Radialschaufellappen 80, 82 jeweils auf die Achse 90 zugerichtet, während, wie Hilfslinien h₃ und h₄ zeigen, die Schaufeln 35 derart im Grundkörper 29 positioniert sind, dass sie in Verlängerung die Achse 90 verfehlen würden. Während sich die Ausrichtung der Schaufeln 35 im Grundkörper 29 aus strömungsdynamischen Bedingungen ergibt, soll durch Ausrichtung der Radialschaufellappen 80, 82 auf die Achse 90 eine eventuelle Unwucht ausgeschlossen werden. Fig. 10 zeigt die diesbezügliche konstruktive Ausführung in vergrößerter Darstellung und zwar beispielhaft behandelt an den radial inneren Radialschaufellappen 82. Wie Fig. 10 zeigt, ist der vom grundkörperseitigen Schaufelrand 94 ausgehende Radialschaufellappen 82 mit seinem freien Ende 96 gegenüber der eigentlichen Schaufel um den Winkel β ausgelenkt, um zumindest das freie Ende 96 des Radialschaufellappens 82 auf die in Fig. 10 nicht dargestellte Achse 90 auszurichten. Um den Radialschaufellappen 82 mit der gewünschten Festigkeit aufnehmen zu können, ist die Radialaufnahme 75 unter einem Winkel α gegenüber der inneren Grundkörperwand 30 des Grundkörpers 29 ausgebildet, wobei, wenn auch die Radialaufnahme 75 zur Achse 90 hin ausgerichtet ist, der Winkel α dem Winkel β im Wesentlichen entspricht. Mit Vorzug verfügt die Radialaufnahme 75 über einen Boden 92, der winkelmäßig an das freie Ende 96 des Radialschaufellappens 82 angepasst ist und diesen somit abstützen kann.

Abschließend sei angemerkt, dass die Schaufeln 35 entlang ihrer fluideintrittsseitigen Kanten 108 mit je einer Schirmung 116 ausgebildet sind, wobei diese Schirmung 116 in Richtung zur Druckseite erfolgt, um die Betriebsfestigkeit der Schaufel zu erhöhen. Diese Schirmung ist in Fig. 11 insbesondere an der rechts eingezeichneten Schaufel zu erkennen.

### Bezugszeichenliste

- 1.: Retarderträger
- 3.: Stützelement
- 5.: Kupplungsnabe
- 7.: Kupplungseinheit
- 9.: Kupplungsgehäuse
- 11.: Radiallagerung
- 13.: Verzahnung
- 15.: Rotornabe
- 17.: Axiallagerung
- 19.: Grundkörper
- 20.: Rotorschale
- 21.: Beschaufelung
- 23.: Schaufeln
- 25.: Rotorschaufelrad
- 27.: Statorschaufelrad
- 29.: Grundkörper
- 30.: innere Grundköperwand
- 31.: Statorschale
- 33.: Beschaufelung
- 34.: Schaufelraum
- 35.: Schaufeln
- 37.: Befestigungselement
- 39.: Gewindehülse
- 41.: hydrodynamischer Kreis
- 43.: Fliudzufuhr
- 45.: Fluidauslass
- 47.: Druckausgleich
- 49.: Ausgleichsraum
- 51.: Dichtflansch
- 53.: Befestigungselemente
- 55.: Aufnahmevorsprung
- 57.: Ringfederdichtung
- 59,61: Schenkel
- 63.: Radialnase
- 65.: Bodenfläche
- 67.: Dichtring
- 69.: Nutung
- 71.: Schmierbohrung
- 73,75: Radialaufnahmen
- 77.: Axialaufnahme
- 80,82: Radialschaufellappen
- 84.: Axialschaufellappen
- 86.: offene Seite
- 88.: axialer Randbereich
- 90.: Achse
- 92.: Boden
- 94.: grundkörperseitiger Schaufelrand
- 96.: freies Ende
- 98.: freies Ende
- 100.: Seitenwände
- 102.: geschlossene Seite
- 104: Boden
- 106.: Anprägung
- 108.: fluideintrittsseitige Kante
- 110.: Anprägung
- 112,114: Stützbereiche
- 116.: Schirmung
- 118.: schaufelinnere Kante
- 120.: Anschlagkanten
- 122.: Axialenden
- 124.: Freiraum
- 126.: Schaufelfläche

## Patentansprüche

1. Hydrodynamischer Retarder oder hydrodynamische Kupplung mit einem ersten Schaufelrad (25) und einem zweiten Schaufelrad (27), die gemeinsam einen hydrodynamischen Kreis (41) bilden und von denen jedes Schaufelrad (25, 27) aus jeweils einem Grundkörper (19, 29) und einer an diesem festen Beschaufelung (21, 33) mit einer Mehrzahl von Schaufeln (23, 35) besteht, die jeweils über Schaufellappen (80, 82, 84) mit Aufnahmen (73, 75, 77) des Grundkörpers (19, 29) in Eingriff bringbar sind, wobei mindestens ein Teil der Schaufellappen (80, 82, 84) sowie der zugeordneten Aufnahmen (73, 75, 77) gegenüber dem jeweiligen Trägerteil, also Schaufel (23, 35) oder Grundkörper (19, 29), mit einer überwiegenden Komponente in Radialrichtung ausgerichtet und somit als Radialschaufellappen (80, 82) oder Radialaufnahmen (73, 75) wirksam sind, und/oder mindestens ein Teil der Schaufellappen (80, 82, 84) sowie der zugeordneten Aufnahmen (73, 75, 77) gegenüber dem jeweiligen Trägerteil mit einer überwiegenden Komponente in Axialrichtung ausgerichtet sind und somit als Axialschaufellappen (84) oder Axialaufnahmen (77) dienen, und wobei die Schaufeln (23, 35) unter einem vorbestimmten Winkel (γ) gegenüber einer geschlossenen Seite des Grundkörpers (19, 29) eingesetzt sind,
**dadurch gekennzeichnet, dass**
wenigstens ein Teil der Radialaufnahmen (73, 75) in den axialen Randbereich (88) des Grundkörpers (19, 29) eines Schaufelrades (25, 27) an dessen dem Grundkörper (19, 29) des jeweils anderen Schaufelrades (25, 27) zugewandter offener Seite (86) zumindest eindringt, und die Axialschaufellappen- (84) jeweils mit ihren vom grundkörperseitigen Schaufelrand (94) abgewandten freien Enden (98) unter dem vorbestimmten Winkel (γ) in die zugeordnete Axialaufnahme (77) eingreifen, und jeweils an ihren vom grundkörperseitigen Schaufelrand (94) abgewandten freien Enden (98) mit Anprägungen (106) ausgebildet sind, die an zumindest einer Seitenwand (100) der Axialaufnahme (77) in Anlage kommen.

2. Hydrodynamischer Retarder oder hydrodynamische Kupplung nach Anspruch 1,
**dadurch gekennzeichnet, dass**
wenigstens ein Teil der Radialaufnahmen (73, 75) den axialen Randbereich (88) des Grundkörpers (19, 29) axial vollständig durchdringt.

3. Hydrodynamischer Retarder oder hydrodynamische Kupplung nach Anspruch 1,
**dadurch gekennzeichnet, dass**
die Axialaufnahmen (77) jeweils Seitenwände (100) aufweisen, die im Wesentlichen senkrecht zur geschlossenen Seite (102) des Grundkörpers (19, 29) verlaufen und über einen Boden (104) miteinander verbunden sind, der im Wesentlichen parallel zur geschlossenen Seite (102) des Grundkörpers (19, 29) ausgerichtet ist, wobei der Boden (104) die Seitenwände (100) auf einem Abstand (A) zueinander hält, der den Querschnitt (L) des Axialschaufellappens (84) übersteigt.

4. Hydrodynamischer Retarder oder hydrodynamische Kupplung nach einem der Ansprüche 1 bis 3
**dadurch gekennzeichnet, dass**
die Schaufeln (23, 35) der Schaufelräder (25, 27) in Richtung zur Druckseite mit einer Schirmung (116) ausgebildet sind.

5. Hydrodynamischer Retarder oder hydrodynamische Kupplung nach einem der Ansprüche 1 bis 3,
**dadurch gekennzeichnet, dass**
die Schaufeln (23, 35) der Schaufelräder (25, 27) an einer fluideintrittsseitigen Kante (108) mit die Scherfläche (S) der Schaufeln (23, 35) vergrößernden Anprägungen (110) versehen sind.

6. Hydrodynamischer Retarder oder hydrodynamische Kupplung nach Anspruch 4 oder 5,
**dadurch gekennzeichnet, dass**
die Anprägungen (110) radial zwischen Stützbereichen (112, 114) der Schaufeln (23, 25) vorgesehen sind, wobei die Stützbereiche (112, 114) als Verbindungen zwischen den Schaufeln (23, 35) und dem Grundkörper (19, 29) vorgesehen sind.

## Claims

1. Hydrodynamic retarder or hydrodynamic coupling having a first blade wheel (25) and having a second blade wheel (27) which together form a hydrodynamic circuit (41), and each of which blade wheels (25, 27) is composed of in each case one base body (19, 29) and a blade arrangement (21, 33), which is fixed to said base body (19, 29), having a plurality of blades (23, 35) which can be placed in engagement in each case by means of blade lobes (80, 82, 84) with receptacles (73, 75, 77) of the base body (19, 29), with at least some of the blade lobes (80, 82, 84) and associated receptacles (73, 75, 77) being aligned with respect to the respective carrier part, that is to say blade (23, 35) or base body (19, 29), with a predominant component in the radial direction, and therefore acting as radial blade lobes (80, 82) or radial receptacles (73, 75), and/or with at least some of the blade lobes (80, 82, 84) and associated receptacles (73, 75, 77) being aligned with respect to the respective carrier part with a predominant component in the axial direction, and therefore serving as axial blade lobes (84) or axial receptacles (77), and with the blades (23, 35) being inserted at a predetermined angle (Y) with respect to a closed side of the base body (19, 29),
**characterized in that**
at least some of the radial receptacles (73, 75) at least penetrate into the axial edge region (88) of the base body (19, 29) of a blade wheel (25, 27) at its open side (86) which faces towards the base body (19, 29) of the in each case other blade wheel (25, 27), and the axial blade lobes (84) engage in each case with their free ends (98), which face away from the base-body-side blade edge (94), into the associated axial receptacle (77) at the predetermined angle (Y), and are formed in each case at their free ends (98), which face away from the base-body-side blade edge (94), with embossings (106) which come into contact with at least one side wall (100) of the axial receptacle (77).

2. Hydrodynamic retarder or hydrodynamic coupling according to Claim 1,
**characterized in that**
at least some of the radial receptacles (73, 75) extend axially completely through the axial edge region (88) of the base body (19, 29).

3. Hydrodynamic retarder or hydrodynamic coupling according to Claim 1,
**characterized in that**
the axial receptacles (77) each have side walls (100) which run substantially perpendicular to the closed side (102) of the base body (19, 29) and which are connected to one another by means of a base (104) which is aligned substantially parallel to the closed side (102) of the base body (19, 29), with the base (104) holding the side walls (100) at a distance (A) from one another, which distance (A) is greater than the cross section (L) of the axial blade lobe (84).

4. Hydrodynamic retarder or hydrodynamic coupling according to one of Claims 1 to 3,
**characterized in that**
the blades (23, 35) of the blade wheels (25, 27) are formed, in the direction of the pressure side, with a shield (116).

5. Hydrodynamic retarder or hydrodynamic coupling according to one of Claims 1 to 3,
**characterized in that**
the blades (23, 35) of the blade wheels (25, 27) are provided, on a fluid-inlet-side edge (108), with embossings (110) which enlarge the shear surface (S) of the blades (23, 35).

6. Hydrodynamic retarder or hydrodynamic coupling according to Claim 4 or 5,
**characterized in that**
the embossings (110) are provided radially between support regions (112, 114) of the blades (23, 25), with the support regions (112, 114) being provided as connections between the blades (23, 35) and the base body (19, 29).

## Revendications

1. Ralentisseur hydrodynamique ou accouplement hydrodynamique comprenant une première roue à aubes (25) et une deuxième roue à aubes (27) qui forment ensemble un circuit hydrodynamique (41), et dont chaque roue à aubes (25, 27) se compose à chaque fois d'un corps de base (19, 29) et d'un aubage (21, 33) fixé sur celui-ci avec une pluralité d'aubes (23, 35), qui peuvent être amenées en prise à chaque fois par le biais de pattes d'aubes (80, 82, 84) avec des logements (73, 75, 77) du corps de base (19, 29), au moins une partie des pattes d'aubes (80, 82, 84) ainsi que des logements associés (73, 75, 77) agissant par rapport à la partie de support respective, c'est-à-dire l'aube (23, 35) ou le corps de base (19, 29), avec une composante principale dans la direction radiale et donc en tant que pattes d'aubes radiales (80, 82) ou de logements radiaux (73, 75), et/ou au moins une partie des pattes d'aubes (80, 82, 84) ainsi que des logements associés (73, 75, 77) étant orientés par rapport à la partie de support respective avec une composante principale dans la direction axiale et donc servant de pattes d'aubes axiales (84) ou de logements axiaux (77), et les aubes (23, 35) étant insérées suivant un angle prédéterminé (γ) par rapport à un côté fermé du corps de base (19, 29),
**caractérisé en ce**
**qu'**au moins une partie des logements radiaux (73, 75) pénètrent au moins dans la région de bord axiale (88) du corps de base (19, 29) d'une roue à aubes (25, 27) sur son côté (86) ouvert tourné vers le corps de base (19, 29) de l'autre roue à aubes respective (25, 27) et les pattes d'aubes axiales (84) venant en prise à chaque fois avec leurs extrémités libres (98) opposées au bord d'aube (94) du côté du corps de base, suivant l'angle prédéterminé (γ) dans le logement axial associé (77), et étant réalisées à chaque fois au niveau de leurs extrémités libres (98) opposées au bord d'aube (94) du côté du corps de base avec des empreintes (106) qui viennent en appui contre au moins une paroi latérale (100) du logement axial (77).

2. Ralentisseur hydrodynamique ou accouplement hydrodynamique selon la revendication 1,
**caractérisé en ce**
**qu'**au moins une partie des logements radiaux (73, 75) traversent axialement complètement la région de bord axiale (88) du corps de base (19, 29).

3. Ralentisseur hydrodynamique ou accouplement hydrodynamique selon la revendication 1,
**caractérisé en ce que**
les logements axiaux (77) présentent à chaque fois des parois latérales (100) qui s'étendent essentiellement perpendiculairement au côté fermé (102) du corps de base (19, 29) et qui sont connectées mutuellement par un fond (104), qui est orienté essentiellement parallèlement au côté fermé (102) du corps de base (19, 29), le fond (104) maintenant les parois latérales (100) espacées les unes des autres d'une distance (A) qui est supérieure à la section transversale (L) de la patte d'aube axiale (84).

4. Ralentisseur hydrodynamique ou accouplement hydrodynamique selon l'une quelconque des revendications 1 à 3,
**caractérisé en ce que**
les aubes (23, 35) des roues à aubes (25, 27) sont réalisées, dans la direction du côté de pression, avec un blindage (116).

5. Ralentisseur hydrodynamique ou accouplement hydrodynamique selon l'une quelconque des revendications 1 à 3,
**caractérisé en ce que**
les aubes (23, 35) des roues à aubes (25, 27) sont pourvues, au niveau d'une arête (108) du côté de l'entrée de fluide, d'empreintes (110) augmentant la surface de cisaillement (S) des aubes (23, 35).

6. Ralentisseur hydrodynamique ou accouplement hydrodynamique selon la revendication 4 ou 5,
**caractérisé en ce que**
les empreintes (110) sont prévues radialement entre des régions de support (112, 114) des aubes (23, 35), les régions de support (112, 114) étant prévues sous forme de connexions entre les aubes (23, 35) et le corps de base (19, 29).
